(19) **Europäisches Patentamt / European Patent Office / Office européen des brevets**

(11) **EP 4 776 231 A1**

(12) # EUROPEAN PATENT APPLICATION
published in accordance with Art. 153(4) EPC

(43) Date of publication:
**15.07.2026 Bulletin 2026/29**

(21) Application number: **24861658.3**

(22) Date of filing: **09.07.2024**

(51) International Patent Classification (IPC):
***G06T 17/00*** *(2006.01)*

(52) Cooperative Patent Classification (CPC):
**G06T 17/00; G06T 7/50;** G06T 2207/10132;
G06T 2207/20081; G06T 2207/20084;
G06T 2207/30048; G06T 2210/41

(86) International application number:
**PCT/CN2024/104350**

(87) International publication number:
**WO 2025/050813 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.09.2023 CN 202311150204**

(71) Applicant: **Shanghai Microport Ep Medtech Co., Ltd.**
**Shanghai 201318 (CN)**

(72) Inventors:
• **ZHOU, Shaohua**
  **Shanghai 201318 (CN)**
• **LV, Yuanyuan**
  **Shanghai 201318 (CN)**
• **SUN, Yiyong**
  **Shanghai 201318 (CN)**
• **SHEN, Liuping**
  **Shanghai 201318 (CN)**
• **WANG, Xinyi**
  **Shanghai 201318 (CN)**
• **GONG, Jingjing**
  **Shanghai 201318 (CN)**

(74) Representative: **Marks & Clerk LLP**
**15 Fetter Lane**
**London EC4A 1BW (GB)**

(54) **THREE-DIMENSIONAL ULTRASONIC MODELING METHOD AND SYSTEM, ELECTRONIC DEVICE AND READABLE STORAGE MEDIUM**

(57) The present invention provides a method and system for 3D ultrasound modeling, an electronic device and a readable storage medium. The method includes: performing a domain transform on each ultrasound image in acquired sequence of ultrasound images of a target organ by a first generative model, thereby obtaining a corresponding sequence of pseudo target-domain images, wherein the sequence of ultrasound images of the target organ includes multiple ultrasound images acquired with an ultrasound probe at different positions, orientations and depths within a cavity of the target organ; obtaining a sparse 3D pseudo target-domain image based on the sequence of pseudo target-domain images and obtaining a dense 3D pseudo target-domain image based on the sparse 3D pseudo target-domain image; obtaining a structural image of the target organ by performing an anatomical structure segmentation of the target organ on the dense 3D pseudo target-domain image; and obtaining a 3D model of the target organ by 3D reconstruction based on the structural image of the target organ. Such a 3D model of a target organ obtainable according to the present invention exhibits increased fineness and clarity, facilitating a physician's accurate analysis of minor lesions and abnormal regions.

EP 4 776 231 A1

PERFORM DOMAIN TRANSFORM ON EACH ULTRASOUND IMAGE IN SEQUENCE OF ACQUIRED ULTRASOUND IMAGES OF TARGET ORGAN BY FIRST GENERATIVE MODEL, THEREBY OBTAINING CORRESPONDING SEQUENCE OF PSEUDO TARGET-DOMAIN IMAGES, WHEREIN SEQUENCE OF ULTRASOUND IMAGES OF TARGET ORGAN INCLUDES MULTIPLE ULTRASOUND IMAGES ACQUIRED WITH ULTRASOUND PROBE AT DIFFERENT POSITIONS, ORIENTATIONS AND DEPTHS WITHIN CAVITY OF TARGET ORGAN — S100

OBTAIN SPARSE 3D PSEUDO TARGET-DOMAIN IMAGE FROM SEQUENCE OF PSEUDO TARGET-DOMAIN IMAGES AND OBTAIN DENSE 3D PSEUDO TARGET-DOMAIN IMAGE FROM SPARSE 3D PSEUDO TARGET-DOMAIN IMAGE — S200

OBTAIN STRUCTURAL IMAGE OF TARGET ORGAN BY ANATOMICAL SEGMENTATION OF TARGET ORGAN ON DENSE 3D PSEUDO TARGET-DOMAIN IMAGE — S300

OBTAIN 3D MODEL OF TARGET ORGAN BY 3D RECONSTRUCTION FROM STRUCTURAL IMAGE OF TARGET ORGAN — S400

Fig. 1

**Description**

**TECHNICAL FIELD**

The present invention relates to the field of image processing technology and, in particular, to a method and system for three-dimensional (3D) ultrasound modeling, an electronic device and a readable storage medium.

**BACKGROUND**

The prevalence of atrial fibrillation (AF), one of the most common cardiac arrhythmias encountered in clinical practice, is surging worldwide, especially in China, under the influence of population aging, chronic heart disease and other factors. At present, transcatheter ablation has been recognized as an effective approach for AF control. This therapy involves three-dimensionally (3D) reconstructing an intracardiac structure using an interventional catheter and delivering energy to a lesion under the guidance of a 3D mapping system. The delivered energy can eliminate abnormal electrical signals by blocking their pathway or destroying abnormal tissue, thereby achieving curative results.

A 3D mapping system can be used to reconstruct an electroanatomic map of the heart and accurately select target ablation sites based on its navigation capabilities, significantly improving the success rate of AF treatment. Such systems utilize high-precision magnetic localization technology to ensure the accuracy of localization and mapping. A 3D cardiac map can be rapidly constructed in real time with a mapping catheter and then incrementally refined in accuracy as the number of mapping points increase. The 3D image is reconstructed and updated in real time as the catheter is moved, providing a surgeon with better guidance in completing a radio frequency (RF) ablation procedure. However, for patients with complex or special cardiac anatomical features, conventional methods for 3D mapping and reconstruction may be not able to provide full information with sufficient accuracy.

Nowadays, ultrasound imaging has been widely used in the field of medicine for clinical diagnosis and treatment. This technology can be used to obtain images of human tissues by transmitting and receiving ultrasound waves, and provides an important imaging tool featuring non-invasiveness, real-timing imaging and non-radioactivity. Three-dimensional (3D) intracardiac ultrasound imaging can be used as a powerful tool for guiding interventional procedures, because it allows for accurate knowledge of cardiovascular structures and precise positioning of surgical instruments.

However, conventional ultrasound imaging techniques suffer from some limitations in terms of, for example:

(1) limitation of resolution: the resolution of conventional ultrasound imaging techniques is limited by the frequency of sound waves and transducer performance, making them sometimes not able to clearly identify minor structures or lesions;

(2) image quality: affected by tissue-induced attenuation, scattering and other physical factors, ultrasound imaging may be associated with problems such as noise, artifacts or image blurring, which can reduce diagnostic accuracy;

(3) lack of comprehensive cardiac information: most conventional ultrasound imaging techniques can only provide information about superficial cardiac structures and are limited in the ability to evaluate deep structures, hemodynamics, cardiac functions, etc., which is not favorable to accurate diagnosis and therapeutic planning; and

(4) human factors: due to differences in personal experience, individuals may have more or less distinct interpretations and insights on the same ultrasound image, and such discrepancies are inevitable.

It should be noted that the information disclosed in this Background section is merely intended to provide a better understanding of the general context of the present invention and should not be taken as an acknowledgement or any form of admission that the information forms part of the common general knowledge of those skilled in the art.

**SUMMARY OF THE INVENTION**

It is an object of the present invention to provide a method and system for 3D ultrasound modeling, an electronic device and a readable storage medium, which can be used to create a 3D model of a target organ with increased fineness and clarity, facilitating a physician's accurate analysis of minor lesions and abnormal regions.

To this end, the present invention provides a method for 3D ultrasound modeling, which comprises:

performing a domain transform on each ultrasound image in an acquired sequence of ultrasound images of a target organ by a first generative model, thereby obtaining a corresponding sequence of pseudo target-domain images, wherein the sequence of ultrasound images of the target organ includes multiple ultrasound images acquired with an ultrasound probe at different positions, orientations and depths within a cavity of the target organ;
obtaining a sparse 3D pseudo target-domain image based on the sequence of pseudo target-domain images and obtaining a dense 3D pseudo target-domain image based on the sparse 3D pseudo target-domain image;

performing an anatomical structure segmentation of the target organ on the dense 3D pseudo target-domain image, thereby obtaining a structural image of the target organ; and

performing a 3D reconstruction based on the structural image of the target organ, thereby obtaining a 3D model of the target organ.

Optionally, the first generative model may be obtained by the steps of:

obtaining multiple first training samples, wherein each first training sample comprises a sample ultrasound image, a sample target-domain image and a corresponding target organ label image, and wherein the target organ label image is obtained from segmentation and labeling of the sample target-domain image;

training a pre-established neural network model using the first training samples, wherein the neural network model comprises a first generative sub-network, a first discriminative sub-network, a first segmentation sub-network, a second generative sub-network, a second discriminative sub-network and a second segmentation sub-network, wherein the first generative sub-network is configured to transform a received image from an ultrasound domain to a target domain, wherein the second generative sub-network is configured to transform a received image from a target domain to an ultrasound domain, wherein the first discriminative sub-network is configured to determine whether a received ultrasound-domain image is true or false, wherein the second discriminative sub-network is configured to determine whether a received target-domain image is true or false, wherein the first segmentation sub-network is configured to perform an anatomical structure segmentation of the target organ on the received ultrasound-domain image, and wherein the second segmentation sub-network is configured to perform an anatomical structure segmentation of the target organ on the received target-domain image; and

regarding the first generative sub-network in the trained neural network model as the first generative model.

Optionally, training the pre-established neural network model using the first training samples may comprise: in each training iteration, first training the first generative sub-network, the first segmentation sub-network, the second generative sub-network and the second segmentation sub-network using the first training samples, then training the first discriminative sub-network and the second discriminative sub-network using the first training samples.

Optionally, the neural network model may be trained using the following loss function:

$$L = \lambda_{cycle} * L_{cycle} + \lambda_{shape} * L_{shape} + \lambda_{gan} * L_{gan}$$

$$L_{cycle} = \left\| \phi_2(\phi_1(x)) - x \right\|_1 + \left\| \phi_1(\phi_2(y)) - y \right\|_1$$

$$L_{shape} = Dice(\varphi_2(y), s) + Dice(\varphi_1(\phi_2(y)), s) + \left\| \varphi_1(x) - \varphi_2(\phi_1(x)) \right\|_1$$

$$L_{gan} = \log \psi_1(x) + \log(1 - \psi_1(\phi_2(y))) + \log \psi_2(y) + \log(1 - \psi_2(\phi_1(x)))$$

where $L_{cycle}$ represents cycle-consistency loss; $L_{shape}$ represents segmentation loss; $L_{gan}$ represents adversarial loss; $\lambda_{cycle}$ represents a weight for $L_{cycle}$; $\lambda_{shape}$ represents a weight for $L_{shape}$; $\lambda_{gan}$ represents a weight for $L_{gan}$; $x$ represents a sample ultrasound image; $y$ represents a sample target-domain image; s represents a target organ label image; $\phi_1(x)$ represents a first pseudo target-domain image generated from a domain transform by the first generative sub-network on the sample ultrasound image; $\phi_2(y)$ represents a first pseudo-ultrasound image generated from a domain transform of the sample target-domain image by the second generative sub-network; $\phi_2(\phi_1(x))$ represents a second pseudo-ultrasound image generated from a domain transform of the first pseudo target-domain image by the second generative sub-network; $\phi_1(\phi_2(y))$ represents a second pseudo target-domain image generated from a domain transform of the first pseudo-ultrasound image by the first generative sub-network; $\varphi_2(y)$ represents a result of anatomical structure segmentation of the target organ performed on the sample target-domain image by the second segmentation sub-network; $\varphi_1(\phi_2(y))$ represents a result of anatomical structure segmentation of the target organ performed on the first pseudo-ultrasound image by the first segmentation sub-network; $\varphi_1(x)$ represents a result of anatomical structure segmentation of the target organ performed on the sample ultrasound image by the first segmentation sub-network; $\varphi_2(\phi_1(x))$ represents a result of anatomical structure segmentation of the target organ performed on the first pseudo target-domain image by the second segmentation sub-network; $\psi_1(x)$ represents a result of determining whether the sample ultrasound image is true or false by the first discriminative sub-network; $\psi_1(\phi_2(y))$ represents a result of determining whether the first pseudo-ultrasound image is true or false by the first discriminative sub-network; $\psi_2(y)$ represents a result of determining whether the sample target-domain image is true or false by the second discriminative sub-network; and $\psi_2(\phi_1(x))$ represents a result of determining whether the first pseudo target-domain image is true or false by the second discriminative sub-network.

Optionally, obtaining the sparse 3D pseudo target-domain image based on the sequence of pseudo target-domain images may comprise:

transforming each pseudo target-domain image in the sequence of pseudo target-domain images into a 3D coordinate system based on position, orientation and depth information of the ultrasound probe associated with a corresponding pseudo target-domain image;

interpolating the sequence of pseudo target-domain images that has been transformed into the 3D coordinate system, thereby obtaining the sparse 3D pseudo target-domain image.

Optionally, obtaining the dense 3D pseudo target-domain image based on the sparse 3D pseudo target-domain image may comprise:

performing a content completion process on the sparse 3D pseudo target-domain image by a completion model, thereby obtaining the dense 3D pseudo target-domain image, wherein the completion model is obtained using second training samples.

Optionally, the second training samples may be obtained by the steps of:

obtaining multiple real 3D target-domain medical images and multiple 3D white noise images;

adding noise to each real 3D target-domain medical image, thereby obtaining a corresponding noise-added sample image;

wherein for each real 3D target-domain medical image, the real 3D target-domain medical image is regarded as a label to combine with a corresponding noise-added sample image in order to form a third training sample;

training a pre-established second generative model based on the third training samples, thereby obtaining a trained second generative model;

denoising each 3D white noise image using the second generative model, thereby obtaining a corresponding augmented 3D target-domain medical image;

regarding each of the real and augmented 3D target-domain medical images as a sample 3D target-domain medical image;

downsampling each sample 3D target-domain medical image, thereby obtaining a corresponding sample sparse 3D target-domain medical image;

wherein for each sample 3D target-domain medical image, the sample 3D target-domain medical image is regarded as a label to combine with a corresponding sample sparse 3D target-domain medical image to form a second training sample.

Optionally, obtaining the 3D model of the target organ by the 3D reconstruction from the structural image of the target organ may comprise:

performing the 3D reconstruction based on the structural image of the target organ using a surface reconstruction algorithm, thereby obtaining the 3D model of the target organ.

Optionally, obtaining the structural image of the target organ by performing the anatomical structure segmentation of the target organ on the dense 3D pseudo target-domain image may comprise:

performing the anatomical structure segmentation of the target organ on the dense 3D pseudo target-domain image using a pre-trained segmentation model, thereby obtaining the structural image of the target organ.

To the above end, the present invention also provides a system for 3D ultrasound modeling, which comprises:

a generative module configured to perform a domain transform on each ultrasound image in an acquired sequence of ultrasound images of a target organ by a first generative model, thereby obtaining a corresponding sequence of pseudo target-domain images, wherein the sequence of ultrasound images of the target organ includes multiple ultrasound images acquired with an ultrasound probe at different positions, orientations and depths within a cavity of the target organ;

a repair module configured to obtain a sparse 3D pseudo target-domain image based on the sequence of pseudo target-domain images and to obtain a dense 3D pseudo target-domain image based on the sparse 3D pseudo target-domain image;

a segmentation module configured to perform an anatomical structure segmentation of the target organ on the dense 3D pseudo target-domain image, thereby obtaining a structural image of the target organ; and

a modeling module configured to perform a 3D reconstruction based on the structural image of the target organ, thereby obtaining a 3D model of the target organ.

Optionally, the repair module may be configured to obtain the sparse 3D pseudo target-domain image by the steps of:

transforming each pseudo target-domain image in the sequence of pseudo target-domain images into a 3D coordinate system based on position, orientation and depth information of the ultrasound probe associated with a corresponding pseudo target-domain image; and
interpolating the sequence of pseudo target-domain images that has been transformed into the 3D coordinate system, thereby obtaining the sparse 3D pseudo target-domain image.

Optionally, the repair module may be configured to obtain the dense 3D pseudo target-domain image by the step of:
performing a content completion process on the sparse 3D pseudo target-domain image by a completion model, thereby obtaining the dense 3D pseudo target-domain image, wherein the completion model is obtained using second training samples.

Optionally, the segmentation module may be configured to perform the anatomical structure segmentation of the target organ on the dense 3D pseudo target-domain image using a pre-trained segmentation model, thereby obtaining the structural image of the target organ.

Optionally, the modeling module may be configured to perform the 3D reconstruction based on the structural image of the target organ using a surface reconstruction algorithm, thereby obtaining the 3D model of the target organ.

To the above end, the present invention also provides an electronic device comprising a processor and a memory storing thereon a computer program, which, when executed by the processor, implements the method as defined above.

To the above end, the present invention also provides a readable storage medium storing thereon a computer program, which, when executed by a processor, implements the method as defined above.

The method, system, electronic device and readable storage medium of the present invention offer the following benefits over the prior art:
In the method of the present invention, a first generative model is used to perform a domain transform on each ultrasound image in an acquired sequence of ultrasound images of a target organ, thereby obtaining a corresponding sequence of pseudo target-domain images. The sequence of ultrasound images of the target organ includes multiple ultrasound images acquired with an ultrasound probe at different positions, orientations and depths within a cavity of the target organ. After that, a sparse 3D pseudo target-domain image is obtained based on the sequence of pseudo target-domain images, and a dense 3D pseudo target-domain image is obtained based on the sparse 3D pseudo target-domain image. A structural image of the target organ is then obtained by performing anatomical structure segmentation of the target organ on the dense 3D pseudo target-domain image. At last, a 3D model of the target organ is obtained by 3D reconstruction based on the structural image of the target organ. Thus, the present invention combines feature of a high spatial resolution of 3D medical images in a target domain, such as CT or MRI, a sequence of ultrasound images is processed into a dense 3D image in the target domain (e.g., CT). In this way, a structural image of a target organ (e.g., the heart) with increased fineness and clarity can be provided for subsequent reconstruction of a 3D model of the target organ (e.g., the heart), which can facilitate a physician's accurate analysis of minor lesions and abnormal regions, reducing diagnostic efficiency degradation in relation to image quality and resulting in higher diagnostic and therapeutic efficiency. In addition, the present invention employs 3D ultrasound technology to obtain information about conditions within a cavity of a target organ (e.g., the heart) in real time. Moreover, due to absence of radioactivity, ultrasound technology can be used throughout a surgical procedure, resulting in an effective increase in surgical efficiency, reduced complications that may arise from the procedure and greatly increased safety of the procedure. Further, according to the present invention, a sequence of ultrasound images of a target organ is acquired with an ultrasound probe at different positions, orientations and depths within a cavity of the target organ. In this way, fine processing can be applied to proximal structures of the target organ (e.g., the heart) closer to the ultrasound probe (i.e., superficial structures), allowing for more precise 3D modeling. Meanwhile, information about distal structures of the target organ (e.g., the heart) farther from the ultrasound probe (i.e., deep structures) can be simultaneously obtained as supporting information to improve the overall accuracy of 3D modeling. Furthermore, based on ultrasound image processing and 3D reconstruction, the present invention enables rapid reconstruction of an anatomical structure of a target organ, especially a complex structure within the heart cavity, during a surgical procedure. The reconstruction results can be displayed in a 3D mapping system, allowing for clear visualization of the entire surgical procedure. This can help a physician perform transseptal puncture and ablation more safely while effectively monitoring adverse events such as thrombosis and cardiac tamponade.

The system, electronic device and readable storage medium of the present invention share the same inventive concept as the method of the present invention and therefore have at least all the benefits thereof. For more details of such benefits of the method, system, electronic device and readable storage medium, reference is made to the above description in connection with the method, and further detailed description thereof is omitted herein for the sake of brevity.

## BRIEF DESCRIPTION OF THE DRAWINGS

Fig. 1 shows a flowchart of a method for 3D ultrasound modeling according to an embodiment of the present invention.

Fig. 2 shows a schematic representation of a neural network model according to an embodiment of the present invention.

Fig. 3 schematically illustrates a content completion process performed by a completion model according to an embodiment of the present invention.

Fig. 4 schematically illustrates an anatomical structure segmentation process performed by a segmentation model on a target organ according to an embodiment of the present invention.

Fig. 5 shows a schematic block diagram of a system for 3D ultrasound modeling according to an embodiment of the present invention.

Fig. 6 shows a schematic block diagram of an electronic device according to an embodiment of the present invention.

List of Reference Numerals

110 generative module; 120 repair module; 130 segmentation module; 140 modeling module;
210 processor; 220 communication interface; 230 memory; 240 communication bus.

## DETAILED DESCRIPTION

Methods and systems for three-dimensional (3D) ultrasound modeling, electronic devices and readable storage media proposed herein will be described in greater detail below with reference to the accompanying drawings, which illustrate specific embodiments of the present invention. From the following description, advantages and features of the invention will become more apparent. Note that the figures are provided in a very simplified form not necessarily drawn to exact scale for the only purpose of helping to explain the disclosed embodiments in a more convenient and clearer way. In order that the objects, features and advantages of the present invention can be more apparent and readily understood, reference is to be made to the accompanying drawings. It would be recognized that architectural, proportional, dimensional and other details in the figures are presented only for the purpose of facilitating, in conjunction with the disclosure herein, the understanding and reading of those familiar with the art, rather than being intended to limit conditions under which the present invention can be implemented. Therefore, any and all architectural modifications, proportional variations or dimensional changes that achieve the same or similar benefits and objects as the present invention are considered to fall within the scope of the teachings herein.

It is noted that relational terms such as "first," "second," and the like may be used herein solely to distinguish one entity or action from another entity or action, without necessarily requiring or implying any actual such relationship or order between such entities or actions. Moreover, the terms "comprising", "including" and any variations thereof are intended to cover a non-exclusive inclusion, such that a process, method, article, or apparatus that comprises a list of elements is not necessarily limited to those elements, but may include other elements not expressly listed or inherent to such process, method, article, or apparatus. An element preceded by "comprises... a" does not, without more constraints, preclude the existence of additional identical elements in the process, method, article, or apparatus that comprises the element. As used herein, the singular forms "a", "an" and "the" include plural referents, and the term "or" is generally employed in the sense of "and/or", "a number of" is generally employed in the sense of "at least one", and "at least two" is generally employed in the sense of "two or more". In addition, the terms "first," "second," and "third" are intended only for illustration and are not to be construed as indicating or implying relative importance, or as implicitly indicating the number of the referenced items.

Reference throughout this specification to "one embodiment", "some embodiments", "an example", "a specific example" "some examples" or the like means that a particular feature, structure, material, or characteristic described in connection with the embodiments or examples is included in at least one embodiment or example of the invention. Thus, the appearances of those phrases in various places throughout this specification are not necessarily referring to the same embodiment or example of the invention. Furthermore, the particular features, structures, materials, or characteristics may be combined in any suitable manner in any one or more embodiments. Further, should there be no contradiction, one of ordinary skill in the art can combine the various embodiments, examples and features thereof described herein in any combination.

In principle, the present invention seeks to provide a method and system for 3D ultrasound modeling, an electronic device and a readable storage medium, which can be used to create a 3D model of a target organ with increased fineness and clarity, facilitating a physician's accurate analysis of minor lesions and abnormal regions.

It should be noted that methods for 3D ultrasound modeling as described herein can be implemented by systems for 3D ultrasound modeling as described herein. The systems can be equipped in electronic devices such as personal computers and mobile terminals. The mobile terminals may be hardware devices with various operating systems, such as mobile phones and tablet computers. Further, it should be noted and will be appreciated by those skilled in the art that, methods and systems for 3D ultrasound modeling as described herein can be used to construct a 3D model of the heart or another organ in real time during a surgical procedure.

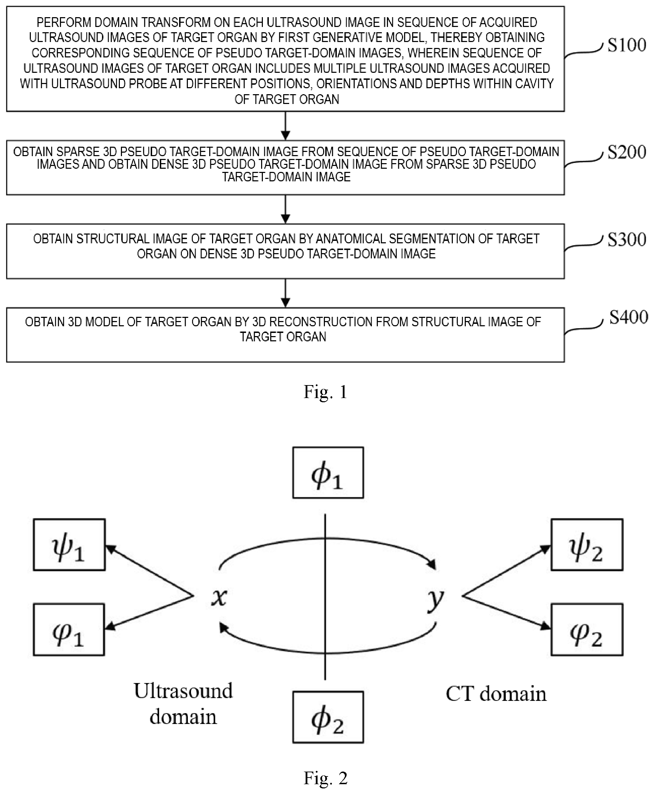

To the end, methods for 3D ultrasound modeling are disclosed herein, and reference is made to Fig. 1, which shows a schematic flowchart of a method for 3D ultrasound modeling according to an embodiment of the present invention. As shown in Fig. 1, a method for 3D ultrasound modeling according to the present invention includes the steps of:

S100: performing a domain transform on each ultrasound image in a sequence of acquired ultrasound images of a target organ by a first generative model, thereby obtaining a corresponding sequence of pseudo target-domain images, wherein the sequence of ultrasound images of the target organ includes multiple ultrasound images acquired with an ultrasound probe at different positions, orientations and depths within a cavity of the target organ;

S200: obtaining a sparse 3D pseudo target-domain image based on the sequence of pseudo target-domain images and obtaining a dense 3D pseudo target-domain image based on the sparse 3D pseudo target-domain image;

S300: obtaining a structural image of the target organ by performing anatomical structure segmentation of the target organ on the dense 3D pseudo target-domain image; and

S400: obtaining a 3D model of the target organ by 3D reconstruction based on the structural image of the target organ.

Thus, the present invention takes advantage of the high spatial resolution of a 3D medical image in a target domain, such as computed tomography (CT) or magnetic resonance imaging (MRI), by processing a sequence of ultrasound images into a dense 3D image in the target domain (e.g., CT). In this way, a structural image of a target organ (e.g., the heart) with increased fineness and clarity can be obtained as a basis for subsequent reconstruction of a 3D model of the target organ (e.g., the heart), which can facilitate a physician's accurate analysis of minor lesions and abnormal regions, reducing diagnostic efficiency degradation in relation to image quality and resulting in higher diagnostic and therapeutic efficiency. In addition, the present invention employs 3D ultrasound technology to obtain information about conditions within a cavity of a target organ (e.g., the heart) in real time. Moreover, due to absence of radioactivity, ultrasound technology can be used throughout a surgical procedure, resulting in an effective increase in surgical efficiency, reduced complications that may arise from the procedure and greatly increased safety of the procedure. Further, according to the present invention, a sequence of ultrasound images of a target organ is acquired with an ultrasound probe at different positions, orientations and depths within a cavity of the target organ. In this way, fine processing can be applied to proximal structures of the target organ (e.g., the heart) closer to the ultrasound probe (i.e., superficial structures), allowing for more precise 3D modeling. Meanwhile, information about distal structures of the target organ (e.g., the heart) farther from the ultrasound probe (i.e., deep structures) can be simultaneously obtained as supporting information to improve the overall accuracy of 3D modeling. Furthermore, based on ultrasound image processing and 3D reconstruction, the present invention enables rapid reconstruction of an anatomical structure of a target organ, especially a complex structure within the heart cavity, during a surgical procedure. The reconstruction results can be displayed in a 3D mapping system, allowing for clear visualization of the entire surgical procedure. This can help a physician perform transseptal puncture and ablation more safely while effectively monitoring adverse events such as thrombosis and cardiac tamponade.

In particular, the ultrasound probe may be mounted at a distal end of an interventional medical catheter, and the distal end of an interventional medical catheter is further provided with a position sensor for measuring the position and orientation of the distal end of the interventional medical catheter (and hence the position and orientation of the ultrasound probe). The interventional medical catheter may be, but is not limited to being, an electrophysiology catheter, an ablation catheter or a mapping catheter. The position sensor may be, without limitation, a magnetic position sensor, an electric position sensor or an electromagnetic position sensor. It should be noted and will be appreciated by those skilled in the art that the target organ may be, without limitation, the heart, and in this case, the anatomical structure of the target organ may be, without limitation, the left atrium, the left inferior pulmonary vein, the left superior pulmonary vein, the right inferior pulmonary vein, the right superior pulmonary vein, or the like. It should also be noted and will be appreciated by those skilled in the art that medical images from different imaging modalities or from different imaging sequences in a single imaging modality can be considered as different domain images. Without limitation, the target domain according to the present invention may be CT or MRI. It should also be noted and will be appreciated by those skilled in the art that ultrasound images obtained by the ultrasound probe at different depths may differ in spatial resolution and that an ultrasound image acquired at a greater depth may be lower in spatial resolution.

In some exemplary embodiments, the first generative model can be obtained using the steps described below.

Multiple first training samples are obtained, each includes a sample ultrasound image, a sample target-domain image and a corresponding target organ label image that is obtained from segmentation and labeling of the sample target-domain image.

A pre-established neural network model is trained by using the first training samples. The neural network model includes a first generative sub-network, a first discriminative sub-network, a first segmentation sub-network, a second generative sub-network, a second discriminative sub-network and a second segmentation sub-network. The first generative sub-network is configured to transform a received image from the ultrasound domain to a target domain, and the second generative sub-network is configured to transform a received image from a target domain to an ultrasound domain. The first discriminative sub-network is configured to determine whether a received ultrasound-domain image is true or false, and the second discriminative sub-network is configured to determine whether a received target-domain image is true or false. The first segmentation sub-network is configured to perform anatomical structure segmentation of the target organ on a received ultrasound-domain image, and the second segmentation sub-network is configured to perform anatomical structure segmentation of the target organ on a received target-domain image.

The first generative sub-network in the trained neural network model is used as the first generative model.

Particular reference is made to Fig. 2, which shows a schematic representation of the neural network model according to an embodiment of the present invention. As shown in Fig. 2, assuming the target domain is CT as an example, the first generative sub-network $\phi_1$ functions to transform ultrasound images $x$ into pseudo-images $y'$, which remain the same in terms of content as the ultrasound images $x$ but appear like CT images. Here, a "pseudo-image" refers to a technically created image that is not real but highly plausible. Similarly, the second generative sub-network $\phi_2$ functions to transform CT images $y$ into pseudo-images $x'$, which remain the same in terms of content as the CT images $y$ but appear like ultrasound images. The first segmentation sub-network $\varphi_1$ is responsible for extracting cavitary structures such as the left atrium and blood vessels from ultrasound images, and the second segmentation sub-network $\varphi_2$ is responsible for extracting cavitary structures such as the left atrium and blood vessels from CT images. It should be noted that the first and second segmentation sub-networks $\varphi_1$, $\varphi_2$ are only responsible for extracting cavitary structures by image segmentation and do not discriminate such cavitary structures from each other. That is, all the extracted cavitary structures are assigned with the same label. As this approach does not involve fine-grained categorization, it provides more ease of segmentation and makes training of the neural network model easier. Additionally, the presence of the first and second segmentation sub-networks $\varphi_1$, $\varphi_2$ enables the first and second generative sub-networks $\phi_1$, $\phi_2$ to generate images with higher quality. Through combining image transformation with image segmentation, the present invention is able to maintain an anatomical structure consistent while generating the images, facilitating the generation of more realistic output images. The first discriminative sub-network $\psi_1$ is configured to determine whether a received image is a real ultrasound image and outputs a value in the range of 0 to 1. This value indicates the probability of a real ultrasound image, and the greater the value, the higher the probability. The second discriminative sub-network $\psi_2$ is configured to determine whether a received image is a real CT image and outputs a value in the range of 0 to 1. This value indicates the probability of a real CT image, and the greater the value, the higher the probability.

In practical surgical applications, since the ultrasound probe may be tuned to different depths, ultrasound images may be acquired at different positions, orientations and depths (and hence with different spatial resolutions). Accordingly, in order to enhance robustness of the network, prior to training on CT images, they may be resampled to different resolutions in consistency with those of ultrasound images.

It should be noted and will be appreciated by those skilled in the art that the present invention is not limited to any particular structure for the first generative sub-network $\phi_1$, the first discriminative sub-network $\psi_1$, the first segmentation sub-network $\varphi_1$, the second generative sub-network $\phi_2$, the second discriminative sub-network $\psi_2$ or the second segmentation sub-network $\varphi_2$. Without limitation, each of the first generative sub-network $\phi_1$, the first segmentation sub-network $\varphi_1$, the second generative sub-network $\phi_2$ and the second segmentation sub-network $\varphi_2$ may adopt a U-Net architecture. Without limitation, each of the first and second discriminative sub-networks may adopt a PatchGan architecture. For more details about the structures and working principles of the U-Net and PatchGan architectures, reference is made to related techniques known to those skilled in the art, and further description thereof is omitted herein.

In some exemplary embodiments, the training of the pre-established neural network model using the first training samples may include the steps described below.

In each training iteration, weight parameters for the first and second discriminative sub-networks and the first and second segmentation sub-networks are fixed, and the first and second generative sub-networks are then trained using the first training samples to update weight parameters for the first and second generative sub-networks. After that, the weight parameters for the first and second generative sub-networks are fixed, and the first and second discriminative sub-networks and the first and second segmentation sub-networks are trained using the first training samples to update the weight parameters for the first and second discriminative sub-networks and the first and second segmentation sub-networks.

Specifically, the training of the neural network model may involve generative adversarial training. Accordingly, in each iteration, the generative related sub-networks (i.e., the first and second generative sub-network $\phi_1$, $\phi_2$) may be trained first, the weight parameters for the first and second discriminative sub-networks $\psi_1$, $\psi_2$ and the first and second

segmentation sub-networks $\varphi_1$, $\varphi_2$ are fixed, with an objective of updating only the weight parameters for generative related first and second generative sub-network $\phi_1$, $\phi_2$. More specifically, pseudo target-domain images (e.g., pseudo-CT images) generated by the first generative sub-network $\phi_1$ may be input to the second discriminative sub-network $\psi_2$, and pseudo-ultrasound images generated by the second generative sub-network $\phi_2$ may be input to the first discriminative sub-network $\psi_1$. Adversarial loss may be calculated based on deviations of outputs of the second discriminative sub-network $\psi_2$ from 1 ("true") and deviations of outputs of the first discriminative sub-network $\psi_1$ from 1 ("true"). This loss may be combined with cycle-consistency loss and segmentation loss as detailed below to calculate a gradient, which may be then used in backpropagation to update the weight parameters for the generative related sub-networks (i.e., the first and second generative sub-networks $\phi_1$, $\phi_2$). As a result of this process, the first generative sub-network $\phi_1$ is enabled to generate more realistic pseudo target-domain images (e.g., pseudo-CT images), and the second generative sub-network $\phi_2$ is enabled to generate more realistic pseudo-ultrasound images. After that, the first and second discriminative sub-networks $\psi_1$, $\psi_2$ and the first and second segmentation sub-networks $\varphi_1$, $\varphi_2$ may be trained at fixed values of the weight parameters for the generative sub-networks (i.e., the first and second generative sub-networks $\phi_1$, $\phi_2$) with an objective of updating only the weight parameters for the first and second discriminative sub-networks $\psi_1$, $\psi_2$ and the first and second segmentation sub-networks $\varphi_1$, $\varphi_2$ The sample ultrasound images may be input to the first discriminative sub-network $\psi_1$ and the sample target-domain images to the second discriminative sub-network $\psi_2$, and deviations of outputs of the first discriminative sub-network $\psi_1$ from 1 ("true") and those of outputs of the second discriminative sub-network $\psi_2$ from 1 ("true") may be calculated. The pseudo target-domain images (e.g., pseudo-CT images) generated by the first generative sub-network $\phi_1$ may be input to the second discriminative sub-network $\psi_2$ and the pseudo-ultrasound images generated by the second generative sub-network $\phi_2$ to the first discriminative sub-network $\psi_1$, and deviations of outputs of the first discriminative sub-network $\psi_1$ from 0 ("false") and those of outputs of the second discriminative sub-network $\psi_2$ from 0 ("false") may be calculated. A gradient may be calculated based on the sum of those deviations and used in backpropagation to update the weight parameters for the first and second discriminative sub-networks $\psi_1$, $\psi_2$. As a result of this process, the first discriminative sub-network $\psi_1$ becomes more capable of identifying pseudo-ultrasound images, and the second discriminative sub-network $\psi_2$ becomes more capable of identifying pseudo target-domain images (e.g., pseudo-CT images). The two processes may be alternately repeated to incrementally enhance the power of both the generative (i.e., the first and second generative sub-networks $\phi_1$, $\phi_2$) and discriminative (i.e., the first and second discriminative sub-networks $\psi_1$, $\psi_2$) parts of the neural network model, enabling the first and second generative sub-networks $\phi_1$, $\phi_2$ to output realistic images. Once using the neural network model that is trained, in response to a set (or sequence) of ultrasound images $\{x_1, x_2, \ldots, x_n\}$ obtained in a single scan of the target organ (e.g., the heart) being input to the first generative sub-network $\phi_1$ (i.e., the first generative model) on an image-by-image basis, a set of pseudo target-domain (e.g., pseudo-CT) images $\{y_1', y_2', \ldots, y_n'\}$ can be obtained.

In some exemplary embodiments, the neural network model may be trained using a loss function defined as follows:

$$L = \lambda_{cycle} * L_{cycle} + \lambda_{shape} * L_{shape} + \lambda_{gan} * L_{gan}$$

$$L_{cycle} = \left\| \phi_2(\phi_1(x) - x) \right\|_1 + \left\| \phi_1(\phi_2(y) - y) \right\|_1$$

$$L_{shape} = Dice(\varphi_2(y), s) + Dice(\varphi_1(\phi_2(y)), s) + \left\| \varphi_1(x) - \varphi_2(\phi_1(x)) \right\|_1$$

$$L_{gan} = \log \psi_1(x) + \log(1 - \psi_1(\phi_2(y))) + \log \psi_2(y) + \log(1 - \psi_2(\phi_1(x)))$$

where $L_{cycle}$ represents cycle-consistency loss; $L_{shape}$, segmentation loss; $L_{gan}$, adversarial loss; $\lambda_{cycle}$, a weight for $L_{cycle}$; $\lambda_{shape}$, a weight for $L_{shape}$; $\lambda_{gan}$, $L_{gan}$; $x$, a sample ultrasound image; $y$, a sample target-domain image, s, a target organ label image; $\phi_1(x)$, a first pseudo target-domain image generated from a domain transform by the first generative sub-network on the sample ultrasound image; $\phi_2(y)$, a first pseudo-ultrasound image generated from a domain transform of the sample target-domain image by the second generative sub-network; $\phi_2(\phi_1(x))$, a second pseudo-ultrasound image generated from a domain transform of the first pseudo target-domain image by the second generative sub-network; $\phi_1(\phi_2(y))$, a second pseudo target-domain image generated from a domain transform of the first pseudo-ultrasound image by the first generative sub-network; $\varphi_2(y)$, a result of performing anatomical structure segmentation of the target organ on the sample target-domain image by the second segmentation sub-network; $\varphi_1(\phi_2(y))$, a result of performing anatomical structure segmentation of the target organ on the first pseudo-ultrasound image by the first segmentation sub-network; $\varphi_1(x)$, a result of performing anatomical structure segmentation of the target organ on the sample ultrasound image by the first segmentation sub-network; $\varphi_2(\phi_1(x))$, a result of performing anatomical structure segmentation of the target organ on the first pseudo target-domain image by the second segmentation sub-network; $\psi_1(x)$, a result of determining whether the sample ultrasound image is true or false by the first discriminative sub-network; $\psi_1(\phi_2(y))$, a result of determining whether the first pseudo-ultrasound image is true or false by the first discriminative sub-network; $\psi_2(y)$, a result of determining whether the sample target-domain image is true or false by the second discriminative sub-network; and $\psi_2(\phi_1(x))$, a result of determining whether the first pseudo target-domain image is true or false by the second discriminative sub-network.

Specifically, in order to ensure image content consistency before and after image transformation, L1 loss (also known as the least absolute deviation) is applied, as the cycle-consistency loss $L_{cycle}$, $\phi_2(\phi_1(x))$, $\phi_1(\phi_2(y))$ and the respective source images $x, y$. In order to train both segmenters, *Dice* loss is applied to the segmentation result of the target-domain (e.g., CT) image and the target organ label image s. Additionally, since anatomical structures remain consistent and unchanged through image reconstruction and transformation, the L1 loss is used to minimize the distances between the corresponding segmentation results, thereby obtaining the segmentation loss $L_{shape}$. $L_{gan}$ is applied as a cross-domain image transformation constraint. Thus, through training the neural network model with the overall loss function $L$ that takes into account all of $L_{cycle}$, $L_{shape}$ and $L_{gan}$, second generative sub-networks $\phi_1, \phi_2$ ) and discriminative (i.e., the first and second discriminative sub-networks $\psi_1, \psi_2$ ) parts of the neural network model become increasingly powerful, allowing the first and second generative sub-networks $\phi_1, \phi_2$ to output realistic images. Further, an Adam optimizer may be used in the process of training to optimize the weight parameters. It should be noted and will be appreciated by those skilled in the art that, in practice, the values of $\lambda_{cycle}$, $\lambda_{shape}$ and $\lambda_{gan}$ may be set as required, and the present invention is not limited to any particular such values. It should be noted and will be appreciated by those skilled in the art that during the training of the first and second generative sub-networks $\phi_1, \phi_2$, the weight parameters for them may be updated based on the cycle-consistency loss $L_{cycle}$, $L_{shape}$ and adversarial loss $L_{gan}$ (or on the overall loss function $L$). In addition, during the training of the first and second discriminative sub-networks $\psi_1, \psi_2$, the weight parameters of the first and second discriminative sub-networks $\psi_1, \psi_2$ may be updated based on the adversarial loss $L_{gan}$. Further, during the training of the first and second segmentation sub-networks $\varphi_1, \varphi_2$ the weight parameters of the first and second segmentation sub-networks $\varphi_1, \varphi_2$ may be updated based on the segmentation loss $L_{shape}$.

Further, the *Dice* loss may be calculated according to:

$$Dice(a,b) = 1 - \frac{2ab + \varepsilon}{a + b + \varepsilon}$$

where $\varepsilon$ is a constant, which can prevent the denominator term from becoming zero.

It should be noted and will be appreciated by those skilled in the art that $\varepsilon$ may be set to 0.001 or another value, as required in practical applications, without limiting the invention in any sense.

In some exemplary embodiments, obtaining the sparse 3D pseudo target-domain image from the sequence of pseudo target-domain images may include:

transforming each pseudo target-domain image in the sequence of pseudo target-domain images into a 3D coordinate system based on position, orientation and depth information of the ultrasound probe associated with the specific pseudo target-domain image; and
interpolating the sequence of pseudo target-domain images that has been transformed into the 3D coordinate system, thereby obtaining the sparse 3D pseudo target-domain image.

Thus, the present invention allows for real-time position and orientation tracking of an ultrasound probe and combines this precisely with ultrasound images to achieve more accurate 3D modeling of a target organ (e.g., the heart), facilitating a physician's real-time observation and analysis of the target organ (e.g., the heart). Through mapping two-dimensional (2D) image data into 3D space based on position and orientation information of an ultrasound probe, spatial consistency of the 2D data across various perspectives can be leveraged to achieve easier recovery of image content information.

Specifically, spatial resolution information of each pseudo target-domain image in the sequence of pseudo target-domain images may be obtained based on depth information of the ultrasound probe at the time of acquisition of an ultrasound image corresponding to the specific pseudo target-domain image. In addition, the pseudo target-domain image may be transformed from a pixel image coordinate system into a physical image coordinate system based on the spatial resolution information, and further the pseudo target-domain image may be transformed from a physical image coordinate system into the 3D coordinate system based on position and orientation information (in the 3D coordinate system) of the ultrasound probe at the time of acquisition of the ultrasound image corresponding to the pseudo target-domain image. Since the coordinate of each pixel dot in the transformed pseudo target-domain image sequence may not necessarily fall exactly on integer coordinate, those dots that do not fall on integer coordinates are referred to as sub-pixel dots. Sub-pixel dots in the transformed pseudo target-domain image sequence may be interpolated. This may involve estimating values (e.g., CT or HU values) of neighboring pixel dots based on values of such sub-pixel dots (e.g., CT or HU values) and spatial information, and be accomplished using a conventional interpolation method known in the art, such as nearest-neighbor interpolation, trilinear interpolation or partial volume (PV) interpolation.

In some exemplary embodiments, obtaining the dense 3D pseudo target-domain image from the sparse 3D pseudo target-domain image may include:

performing a content completion process on the sparse 3D pseudo target-domain image by a completion model, thereby obtaining the dense 3D pseudo target-domain image, wherein the completion model has been trained using second training samples.

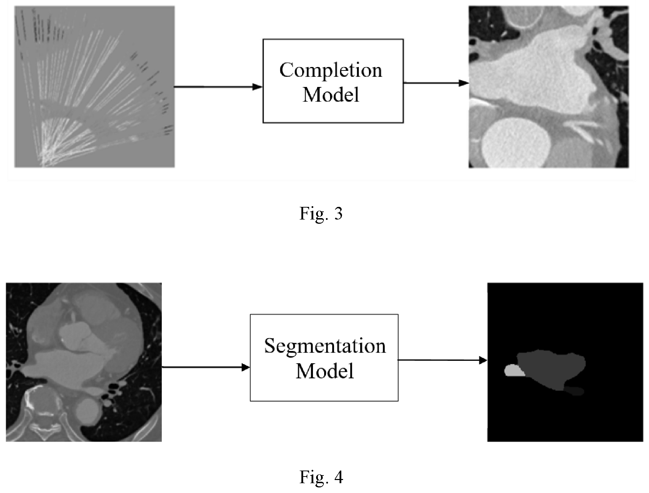

In particular, without limitation, the completion model may employ a 3D U-Net architecture. Reference is made to Fig. 3, which schematically illustrates a content completion process performed by the completion model according to an embodiment of the present invention. As shown in Fig. 3, the content completion process performed by the completion model on the sparse 3D pseudo target-domain image may involve completing the sparse image with more easily available a-priori knowledge in the target domain (e.g., CT). This enables a structural image of the target organ (e.g., the heart) with increased fineness and clarity to be provided for the subsequent reconstruction of a 3D model of the target organ (e.g., the heart), facilitating a physician's accurate analysis of minor lesions and abnormal regions. It should be noted and will be appreciated by those skilled in the art that the sparse 3D pseudo target-domain image may be regarded as a stack of 2D image slices. In Fig. 3, the processing of a single 2D image slice is illustrated to exemplify the content completion process performed by the completion model on the sparse 3D pseudo target-domain image.

In some exemplary embodiments, the second training samples are obtained by the following steps:

obtaining multiple real 3D target-domain medical images and multiple 3D white noise images;
adding noise to each of the real 3D target-domain medical images, thereby obtaining corresponding noise-added sample images;
for each real 3D target-domain medical image, the real 3D target-domain medical image is regarded as a label to combine with a corresponding noise-added sample image to form a third training sample;
training a pre-established second generative model based on the third training samples, thereby obtaining the trained second generative model;
denoising each of the 3D white noise images using the second generative model, thereby obtaining corresponding augmented 3D target-domain medical images;
regarding both the real and augmented 3D target-domain medical images as sample 3D target-domain medical images;
downsampling each of the sample 3D target-domain medical images, thereby obtaining corresponding sample sparse 3D target-domain medical images;
for each sample 3D target-domain medical image, the sample 3D target-domain medical image is regarded as a label to combine with a corresponding sample sparse 3D target-domain medical image to form a second training sample.

Using the second generative model to augment a training dataset required by training of the completion model can diversify the training dataset and make the algorithm more robust, avoiding the issue of poor robustness that may otherwise occur due to insufficient dataset. As a result, once trained, the completion model can provide better content completion of the sparse 3D pseudo target-domain image. It should be noted and will be appreciated by those skilled in the art that, for more details about the addition of noise to the real 3D target-domain medical images, reference is made to related techniques known to those skilled in the art. Further description thereof is omitted herein for the sake of brevity. It should also be noted and will be appreciated by those skilled in the art that the downsampling of the sample 3D target-domain medical images into the sample sparse 3D target-domain medical images may be accomplished by simulating the acquisition of ultrasound data.

In particular, the second generative model may include, without limitation, a generative sub-network, a variational autoencoder (VAE), a diffusion model or the like in a generative adversarial network.

For example, the second generative model may be a diffusion model, which is a class of unconditional generative methods that transform a Gaussian distribution into an empirical data distribution. In particular, its forward process is a Markovian chain that gradually adds noise to a "clean" image, as expressed by:

$$q(Y_{dense}^t | Y_{dense}^{t-1}) = N\left(Y_{dense}^t; \sqrt{1 - \beta^t} Y_{dense}^t, \beta^t I\right)$$

$$q(Y_{dense}^0 | Y_{dense}^{t-1}) = N\left(Y_{dense}^t; \sqrt{\bar{\alpha}^t} Y_{dense}^0, (1 - \bar{\alpha}^t)I\right),$$

where $Y_{dense}^t$ represents an intermediate image after the t-th cycle of noise addition; $Y_{dense}^0$, an image after the zeroth cycle, i.e., a real target-domain image (e.g., a real CT image); and $\beta^t$, a noise level. Moreover, $\alpha^t = 1 - \beta^t$ and

$$\bar{\alpha}^t = \coprod_{s=1}^t \alpha^s$$ . $N$ denotes a normal distribution, and $I$ represents a unitary matrix. Generally, for simplicity, $\beta^t$ follows a fixed decay pattern. When the total number of iterations T is sufficiently large, only noise will be observed in

$Y_{dense}^T$ . A CNN model may be used to gradually reverse the forward diffusion process, i.e., to denoise $Y_{dense}^t$ . The backward diffusion process may be estimated according to:

$$p_\theta(Y_{dense}^{t-1} | Y_{dense}^t) = N(Y_{dense}^{t-1}; \epsilon_\theta(Y_{dense}^t, t), (\sigma^t)^2 I),$$

where $(\sigma^t)^2 = \bar{\beta}^t = \frac{1-\bar{\alpha}^{t-1}}{1-\bar{\alpha}^t}\beta^t$ , and $\varepsilon_\theta$ can be obtained by diffusion noise training using an L2 loss function (i.e., an L2-norm loss function, also known as the least-squares error) (i.e., after the second generative model is trained, $\varepsilon_\theta$ can be obtained as a weight parameter in the trained second generative model). In this way, through the backward diffusion process, realistic target-domain data (e.g., CT data) can be obtained from randomly sampled white noise to augment the sample set required by training of the completion model.

Additionally, the training of the completion model could be optimized using the L2 loss function in combination with an Adam optimizer. It should be noted that, for more details of the training of the completion model using the second training samples, reference is made to related techniques known to those skilled in the art. Further description thereof is omitted herein for the sake of brevity.

In some exemplary embodiments, obtaining the 3D model of the target organ by the 3D reconstruction from the structural image of the target organ may include:
performing the 3D reconstruction from the structural image of the target organ using a surface reconstruction algorithm, thereby obtaining the 3D model of the target organ.

Through the 3D reconstruction from the structural image of the target organ using the surface reconstruction algorithm, the structural image of the target organ can be converted into the 3D model of the target organ (e.g., the heart), which is visible by a physician and thus facilitates his/her analysis and processing.

Specifically, the target organ is typically a solid body in the structural image. This is because images that are scanned by medical imaging devices such as CT, MRI and other devices are represented in the unit of voxel, which is a discrete point having uniform volume in 3D space. Each voxel in a CT or MRI image contains information about tissue absorption and density. The surface reconstruction algorithm, which may be an algorithm commonly used in the art, such as triangulation or Poisson reconstruction, can transform extracted boundary and surface information into the model that is a more geometric representation. Such algorithms may provide visualization by representing surfaces of the model in the form of point clouds, triangular meshes or the like, thereby facilitating a physician's analysis and processing. It should be noted and will be appreciated by those skilled in the art that other modeling approaches than the surface reconstruction algorithm may also be used to perform reconstruction of the 3D model of the target organ. More details about such 3D modeling techniques are known to those skilled in the art and, therefore, need not be described in further detail herein. It should also be noted and will be appreciated by those skilled in the art that, for more details of the surface reconstruction algorithm, reference is made to related techniques known to those skilled in the art. Further description thereof is omitted herein for the sake of brevity.

In some exemplary embodiments, obtaining the structural image of the target organ by performing the anatomical structure segmentation of the target organ on the dense 3D pseudo target-domain image may include:
performing the anatomical structure segmentation of the target organ on the dense 3D pseudo target-domain image using a pre-trained segmentation model, thereby obtaining the structural image of the target organ.

In particular, network structure of the segmentation model may be a 3D network, which may be a 3D U-Net architecture, without limitation. Reference is made to Fig. 4, a schematic illustration of the anatomical structure segmentation of the target organ by the segmentation model according to an embodiment of the present invention. As shown in Fig. 4, the use of the segmentation model enables rapid, accurate anatomical structure segmentation of the target organ, which shortens a physician's learning curve and facilitates his/her accurate, efficient, safe clinical diagnosis and treatment. It should be noted and will be appreciated by those skilled in the art that Fig. 4 shows only a schematic representation of a single slice of 3D input and output data.

Further, the training of a segmentation model requires preparing multiple target domain scan data (e.g., CT or MRI scan data) as input, with anatomical structure segmentation data of the target organ being taken as labels, and the training can be optimized using Dice loss in combination with an Adam optimizer. It should be noted and will be appreciated by those skilled in the art that, for more details of the training of the segmentation model, reference is made to related techniques known to those skilled in the art. Further description thereof is omitted herein for the sake of brevity.

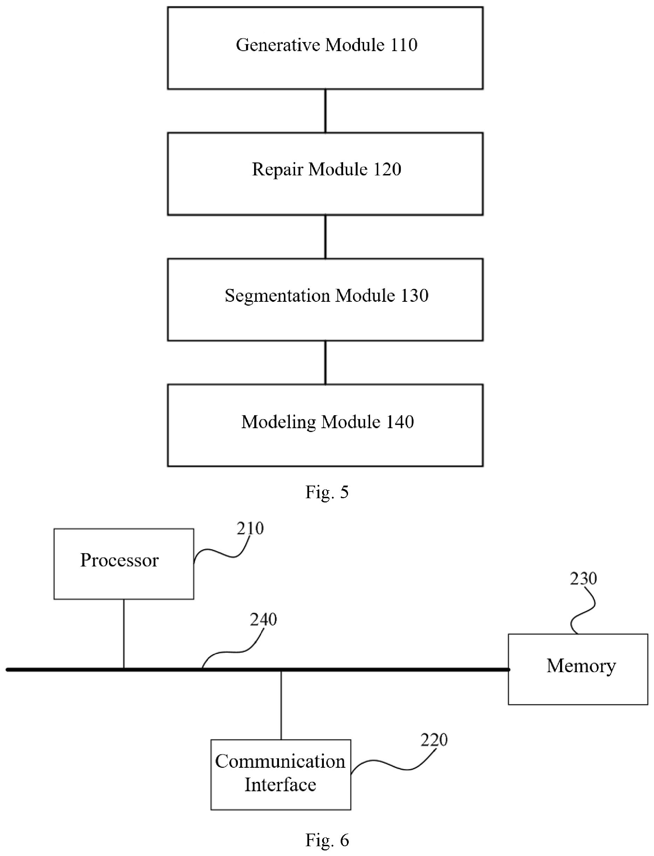

The present invention also provides a system for 3D ultrasound modeling, which share the same inventive concept. Fig. 5 shows a schematic block diagram of the 3D ultrasound modeling system according to an embodiment of the present invention. As shown in Fig. 5, the 3D ultrasound modeling system includes a generative module 110, a repair module 120, a segmentation module 130 and a modeling module 140. The generative module 110 is configured to perform a domain transform on each ultrasound image in a sequence of acquired ultrasound images of a target organ by a first generative model, thereby obtaining a corresponding sequence of pseudo target-domain images, wherein the sequence of ultrasound images of the target organ includes multiple ultrasound images acquired with an ultrasound probe at different positions, orientations and depths within a cavity of the target organ. The repair module 120 is configured to obtain a sparse 3D pseudo target-domain image based on the sequence of pseudo target-domain images and obtain a dense 3D pseudo target-domain image based on the sparse 3D pseudo target-domain image. The segmentation module 130 is configured to obtain a structural image of the target organ by performing anatomical structure segmentation of the target organ on the dense 3D pseudo target-domain image. The modeling module 140 is configured to obtain a 3D model of the target organ by 3D reconstruction based on the structural image of the target organ.

Thus, the present invention takes advantage of a high spatial resolution of 3D medical images in a target domain, such as CT or MRI, by processing a sequence of ultrasound images into a dense 3D image in the target domain (e.g., CT). In this way, a structural image of a target organ (e.g., the heart) with increased fineness and clarity can be provided for subsequent reconstruction of a 3D model of the target organ (e.g., the heart), which can facilitate a physician's accurate analysis of minor lesions and abnormal regions, reducing diagnostic efficiency degradation in relation to image quality and resulting in higher diagnostic and therapeutic efficiency. In addition, the present invention employs 3D ultrasound technology to obtain information about conditions within a cavity of a target organ (e.g., the heart) in real time. Moreover, due to absence of radioactivity, ultrasound technology can be used throughout a surgical procedure, resulting in an effective increase in surgical efficiency, reduced complications that may arise from the procedure and greatly increased safety of the procedure. Further, according to the present invention, a sequence of ultrasound images of a target organ is acquired with an ultrasound probe at different positions, orientations and depths within a cavity of the target organ. In this way, fine processing can be applied to proximal structures of the target organ (e.g., the heart) closer to the ultrasound probe (i.e., superficial structures), allowing for more precise 3D modeling. Meanwhile, information about distal structures of the target organ (e.g., the heart) farther from the ultrasound probe (i.e., deep structures) can be simultaneously obtained as supporting information to improve the overall accuracy of 3D modeling. Furthermore, based on ultrasound image processing and 3D reconstruction, the present invention enables rapid reconstruction of an anatomical structure of a target organ, especially a complex structure within the heart cavity, during a surgical procedure. The reconstruction results can be displayed in a 3D mapping system, allowing for clear visualization of the entire surgical procedure. This can help a physician perform transseptal puncture and ablation more safely while effectively monitoring adverse events such as thrombosis and cardiac tamponade.

In some exemplary embodiments, the repair module 120 is configured to obtain the sparse 3D pseudo target-domain image by following steps:

transforming each pseudo target-domain image in the sequence of pseudo target-domain images into a 3D coordinate system based on position, orientation and depth information of the ultrasound probe associated with the specific pseudo target-domain image; and
interpolating the sequence of pseudo target-domain images that has been transformed into the 3D coordinate system, thereby obtaining the sparse 3D pseudo target-domain image.

In some exemplary embodiments, the repair module 120 is configured to obtain the dense 3D pseudo target-domain image by following steps:
obtaining the dense 3D pseudo target-domain image based on the sparse 3D pseudo target-domain image. This obtainment may include:
performing a content completion process on the sparse 3D pseudo target-domain image by a completion model, thereby obtaining the dense 3D pseudo target-domain image, wherein the completion model is obtained using second training samples.

In some exemplary embodiments, the segmentation module 130 is configured to perform the anatomical structure segmentation of the target organ on the dense 3D pseudo target-domain image using a pre-trained segmentation model, thereby obtaining the structural image of the target organ.

In some exemplary embodiments, the modeling module 140 is configured to perform the 3D reconstruction based on the structural image of the target organ using a surface reconstruction algorithm, thereby obtaining the 3D model of the target organ.

The present invention also provides an electronic device, which share the same inventive concept. Fig. 6 shows a schematic block diagram of the electronic device according to an embodiment of the present invention. As shown in Fig. 6, the electronic device includes a processor 210 and memory 230 storing therein a computer program which, when executed by the processor 210, implements the method for 3D ultrasound modeling as defined above. Since the electronic device shares the same inventive concept as the method, it has at least all the benefits thereof. For more details of such benefits of the method and electronic device, reference is made to the above description in connection with the method, and further detailed description thereof is omitted herein for the sake of brevity.

As shown in Fig. 6, the electronic device further includes a communication interface 220 and communication bus 240. Communication among the processor 210, the communication interface 220 and the memory 230 is accomplished through the communication bus 240. The communication bus 240 may be, among others, a peripheral component interconnect (PCI) bus or extended industry standard architecture (EISA) bus. The communication bus 240 may be an address bus, data bus, control bus or other bus. Although it is represented by only one bold line in the figure for ease of illustration, this does not mean that there is only one bus, or only one type of bus. The communication interface 220 is used to enable communication of the electronic device with other devices.

According to the invention, the processor 210 may be a central processing unit (CPU) or other general-purpose processor, a digital signal processor (DSP), an application specific integrated circuit (ASIC), a field-programmable gate array (FPGA) or other programmable logic device, a discrete gate or transistor-transistor logic device, a discrete hardware component, or the like. The general-purpose processor may be a microprocessor or any other conventional processor. The processor 210 may serve as a control center of the electronic device, and the various components in the electronic device may be interconnected with various interfaces and lines.

The processor 210 can perform various functions of the electronic device by running or executing the computer program stored in the memory 230 and retrieving data stored in the memory 230.

The memory 230 may include non-volatile and/or volatile memory. Non-volatile memory may include read-only memory (ROM), programmable ROM (PROM), electrically programmable ROM (EPROM), electrically erasable programmable ROM (EEPROM) or flash memory. Volatile memory may include random-access memory (RAM) or external cache memory. For illustration rather than limitation, RAM is available in many forms such as static RAM (SRAM), dynamic RAM (DRAM), synchronous DRAM (SDRAM), double-data-rate SDRAM (DDRSDRAM), enhanced SDRAM (ESDRAM), Synchlink DRAM (SLDRAM), Rambus direct RAM (RDRAM), Direct Rambus DRAM (DRDRAM), Rambus DRAM(RDRAM), etc.

The present invention also provides a readable storage medium storing therein a computer program which, when executed by a processor, implements the method for 3D ultrasound modeling as defined above. The readable storage medium shares the same inventive concept as the method and therefore has at least all the benefits thereof. For more details of such benefits of the method and readable storage medium, reference is made to the above description in connection with the method, and further detailed description thereof is omitted herein for the sake of brevity.

It should be noted and will be appreciated by those skilled in the art that the readable storage medium may be implemented as one of various computer-readable media, or any combination thereof. Each of the readable media may be a computer-readable signal medium or a computer-readable storage medium. The computer-readable storage medium may be, for example, but is not limited to, an electronic, magnetic, optical, electromagnetic, infrared, or semiconductor system, apparatus, or device, or any suitable combination of the foregoing. More specific examples (a non-exhaustive list) of the computer-readable storage medium would include the following: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. As used herein, the phase "computer-readable storage medium" may refer to any tangible medium that can contain, or store a program for use by or in connection with an instruction execution system, apparatus, or device.

Further, the computer-readable signal medium may include a propagated data signal with computer-readable program code embodied therein, for example, in baseband or as part of a carrier wave. Such a propagated signal may take any of a variety of forms, including, but not limited to, electro-magnetic, optical, or any suitable combination thereof. The computer-readable signal medium may also be any computer-readable medium that is not a computer-readable storage medium and that can communicate, propagate, or transport a program for use by or in connection with an instruction execution system, apparatus, or device. Program code embodied on the computer-readable medium may be transmitted using any appropriate medium, including but not limited to wireless, wireline, optical fiber cable, RF, etc., or any suitable combination of the foregoing.

In summary, methods and systems for 3D ultrasound modeling, electronic devices and readable storage media according to the present invention offer the following benefits over the prior art:

(1) combining with the feature of the high spatial resolution of a 3D medical image in a target domain, such as CT or MRI, a sequence of ultrasound images is processed into a dense 3D image in the target domain (e.g., CT). In this way, a structural image of a target organ (e.g., the heart) with increased fineness and clarity can be provided for subsequent reconstruction of a 3D model of the target organ (e.g., the heart), which can facilitate a physician's accurate analysis of minor lesions and abnormal regions.

(2) 3D ultrasound technology is employed to obtain information about conditions within a cavity of a target organ (e.g., the heart) in real time. Moreover, due to absence of radioactivity, ultrasound technology can be used throughout a surgical procedure, resulting in an effective increase in surgical efficiency, reduced complications that may arise from the procedure and greatly increased safety of the procedure.

(3) A sequence of ultrasound images of a target organ is acquired with an ultrasound probe at different positions, orientations and depths within a cavity of the target organ. In this way, fine processing can be applied to proximal structures of the target organ (e.g., the heart) closer to the ultrasound probe (i.e., superficial structures), allowing for more precise 3D modeling. Meanwhile, information about distal structures of the target organ (e.g., the heart) farther from the ultrasound probe (i.e., deep structures) can be simultaneously obtained as supporting information to improve the overall accuracy of 3D modeling.

(4) Based on ultrasound image processing and 3D reconstruction, rapid reconstruction of an anatomical structure of a target organ, especially a complex structure within the heart cavity, is enabled during a surgical procedure. The reconstruction results can be displayed in a 3D mapping system, allowing for clear visualization of the entire surgical procedure. This can help a physician perform transseptal puncture and ablation more safely while effectively monitoring adverse events such as thrombosis and cardiac tamponade.

(5) The position and orientation of an ultrasound probe can be tracked in real time and combined precisely with ultrasound images to achieve more accurate 3D modeling of a target organ (e.g., the heart), facilitating a physician's real-time observation and analysis of the target organ (e.g., the heart).

(6) Position and orientation information of an ultrasound probe can be utilized to map 2D image data into 3D space, allowing for easier recovery of image content information by taking the advantage of spatial consistency of the 2D data across various perspectives. Additionally, a completion model trained on target-domain data (e.g., CT data) can be used to complete a sparse image, allowing more a-priori knowledge to be obtained from the target-domain data (e.g., CT data) that is more easily available and avoiding the problem of poor robustness that may otherwise occur due to insufficient ultrasound data.

(7) The powerful analytical capabilities of artificial intelligence (AI) algorithms can be leveraged to process and analyze massive intracardiac ultrasound data in real time and generate accurate cardiac models in real time. Such real-time data processing and modeling can help a physician perform more accurate structural, functional and hemodynamic assessment of cardiac structures and thus provide the physician with better guidance in diagnostic and therapeutic decision-making. Thus, more accurate and more comprehensive guidance can be provided in the diagnosis and treatment of heart diseases, contributing to the development of cardiac imaging and promoting its clinical application.

It should be noted and will be appreciated by those skilled in the art that computer program code for carrying out operations of the present invention may be written in any combination of one or more programming languages, including an object-oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on a remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

It is noted that the devices and methods in the embodiments disclosed herein may also be implemented in other ways and the device embodiments described above are merely illustrative. For example, the flowcharts and block diagrams in the figures illustrate the architecture, functionality and operation of possible implementations of devices, methods, and computer program products according to various embodiments of the present invention. In this regard, each block in the flowcharts or block diagrams may represent a module, segment, or portion of instructions, which comprises one or more executable instructions for implementing the specified logical function(s). It is also noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It is further noted that each block of the block diagrams and/or flowchart illustrations, and combinations of blocks in the block diagrams and/or flowchart illustrations, can be implemented by special purpose hardware-based systems that perform the specified functions or acts or can be implemented by combinations of special purpose hardware and computer instructions. Further, the various functional modules in the embodiments disclosed herein may be integrated into a discrete component, or provided as separate modules. Alternatively, two or more such modules may be integrated into a discrete component.

It should be noted that the description presented above is merely that of some embodiments of the present invention and is not intended to limit the scope thereof in any sense. Any and all changes and modifications made by those of ordinary skill in the art in light of the above teachings fall within the scope as defined in the appended claims. Apparently, those skilled in the art can make various modifications and variations to the present invention without departing from the spirit and scope thereof. Accordingly, the invention is intended to embrace all such modifications and variations if they fall within the scope of the appended claims and equivalents thereof.

**Claims**

1.  A method for three-dimensional (3D) ultrasound modeling, comprising:

    performing a domain transform on each ultrasound image in an acquired sequence of ultrasound images of a target organ by a first generative model, thereby obtaining a corresponding sequence of pseudo target-domain images, wherein the sequence of ultrasound images of the target organ includes multiple ultrasound images acquired with an ultrasound probe at different positions, orientations and depths within a cavity of the target organ; obtaining a sparse 3D pseudo target-domain image based on the sequence of pseudo target-domain images and obtaining a dense 3D pseudo target-domain image based on the sparse 3D pseudo target-domain image; performing an anatomical structure segmentation of the target organ on the dense 3D pseudo target-domain image, thereby obtaining a structural image of the target organ; and performing a 3D reconstruction based on the structural image of the target organ, thereby obtaining a 3D model of the target organ.

2.  The method according to claim 1, wherein the first generative model is obtained by the steps of:

    obtaining multiple first training samples, wherein each first training sample comprises a sample ultrasound image, a sample target-domain image and a corresponding target organ label image, and wherein the target organ label image is obtained from segmentation and labeling of the sample target-domain image; training a pre-established neural network model using the first training samples, wherein the neural network model comprises a first generative sub-network, a first discriminative sub-network, a first segmentation sub-network, a second generative sub-network, a second discriminative sub-network and a second segmentation sub-network, wherein the first generative sub-network is configured to transform a received image from an ultrasound domain to a target domain, wherein the second generative sub-network is configured to transform a received image from a target domain to an ultrasound domain, wherein the first discriminative sub-network is configured to determine whether a received ultrasound-domain image is true or false, wherein the second discriminative sub-network is configured to determine whether a received target-domain image is true or false, wherein the first segmentation sub-network is configured to perform an anatomical structure segmentation of the target organ on the received ultrasound-domain image, and wherein the second segmentation sub-network is configured to perform an anatomical structure segmentation of the target organ on the received target-domain image; and regarding the first generative sub-network in the trained neural network model as the first generative model.

3.  The method according to claim 2, wherein training the pre-established neural network model using the first training samples comprises:
    in each training iteration, firstly training the first generative sub-network, the first segmentation sub-network, the second generative sub-network and the second segmentation sub-network using the first training samples, then training the first discriminative sub-network and the second discriminative sub-network using the first training samples.

4.  The method according to claim 2, wherein the neural network model is trained using the following loss function:

$$L = \lambda_{cycle} * L_{cycle} + \lambda_{shape} * L_{shape} + \lambda_{gan} * L_{gan}$$

$$L_{cycle} = \left\| \phi_2(\phi_1(x) - x) \right\|_1 + \left\| \phi_1(\phi_2(y) - y) \right\|_1$$

$$L_{shape} = Dice(\varphi_2(y), s) + Dice(\varphi_1(\phi_2(y)), s) + \left\| \varphi_1(x) - \varphi_2(\phi_1(x)) \right\|_1$$

$$L_{gan} = \log \psi_1(x) + \log(1 - \psi_1(\phi_2(y))) + \log \psi_2(y) + \log(1 - \psi_2(\phi_1(x)))$$

where $L_{cycle}$ represents cycle-consistency loss; $L_{shape}$ represents segmentation loss; $L_{gan}$ represents adversarial loss; $\lambda_{cycle}$ represents a weight for $L_{cycle}$; $\lambda_{shape}$ represents a weight for $L_{shape}$; $\lambda_{gan}$ represents a weight for $L_{gan}$; x represents a sample ultrasound image; y represents a sample target-domain image; s represents a target organ label image; $\phi_1(x)$ represents a first pseudo target-domain image generated from a domain transform by the first generative sub-network on the sample ultrasound image; $\phi_2(y)$ represents a first pseudo-ultrasound image generated from a domain transform of the sample target-domain image by the second generative sub-network; $\phi_2(\phi_1(x))$ represents a second pseudo-ultrasound image generated from a domain transform of the first pseudo target-domain image by the second generative sub-network; $\phi_1(\phi_2(y))$ represents a second pseudo target-domain image generated from a domain transform of the first pseudo-ultrasound image by the first generative sub-network; $\varphi_2(y)$ represents a result of anatomical structure segmentation of the target organ performed on the sample target-domain image by the second segmentation sub-network; $\varphi_1(\phi_2(y))$ represents a result of anatomical structure segmentation of the target organ performed on the first pseudo-ultrasound image by the first segmentation sub-network; $\varphi_1(x)$ represents a result of anatomical structure segmentation of the target organ performed on the sample ultrasound image by the first segmentation sub-network; $\varphi_2(\phi_1(x))$ represents a result of anatomical structure segmentation of the target organ performed on the first pseudo target-domain image by the second segmentation sub-network; $\psi_1(x)$ represents a result of determining whether the sample ultrasound image is true or false by the first discriminative sub-network; $\psi_1(\phi_2(y))$ represents a result of determining whether the first pseudo-ultrasound image is true or false by the first discriminative sub-network; $\psi_2(y)$ represents a result of determining whether the sample target-domain image is true or false by the second discriminative sub-network; and $\psi_2(\phi_1(x))$ represents a result of determining whether the first pseudo target-domain image is true or false by the second discriminative sub-network.

5. The method according to claim 1, wherein obtaining the sparse 3D pseudo target-domain image based on the sequence of pseudo target-domain images comprises:

   transforming each pseudo target-domain image in the sequence of pseudo target-domain images into a 3D coordinate system based on position, orientation and depth information of the ultrasound probe associated with a corresponding pseudo target-domain image;
   interpolating the sequence of pseudo target-domain images that has been transformed into the 3D coordinate system, thereby obtaining the sparse 3D pseudo target-domain image.

6. The method according to claim 1, wherein obtaining the dense 3D pseudo target-domain image based on the sparse 3D pseudo target-domain image comprises:
   performing a content completion process on the sparse 3D pseudo target-domain image by a completion model, thereby obtaining the dense 3D pseudo target-domain image, wherein the completion model is obtained using second training samples.

7. The method according to claim 6, wherein the second training samples are obtained by the steps of:

   obtaining multiple real 3D target-domain medical images and multiple 3D white noise images;
   adding noise to each real 3D target-domain medical image, thereby obtaining a corresponding noise-added sample image;
   wherein for each real 3D target-domain medical image, the real 3D target-domain medical image is regarded as a label to combine with a corresponding noise-added sample image in order to form a third training sample;
   training a pre-established second generative model based on the third training samples, thereby obtaining a trained second generative model;
   denoising each 3D white noise image using the second generative model, thereby obtaining a corresponding augmented 3D target-domain medical image;
   regarding each of the real and augmented 3D target-domain medical images as a sample 3D target-domain medical image;
   downsampling each sample 3D target-domain medical image, thereby obtaining a corresponding sample sparse 3D target-domain medical image;
   wherein for each sample 3D target-domain medical image, the sample 3D target-domain medical image is regarded as a label to combine with a corresponding sample sparse 3D target-domain medical image in order to form a second training sample.

8. The method according to claim 1, wherein obtaining the 3D model of the target organ by performing the 3D reconstruction based on the structural image of the target organ comprises:
performing the 3D reconstruction based on the structural image of the target organ using a surface reconstruction algorithm, thereby obtaining the 3D model of the target organ.

9. The method according to claim 1, wherein obtaining the structural image of the target organ by performing the anatomical structure segmentation of the target organ on the dense 3D pseudo target-domain image comprises:
performing the anatomical structure segmentation of the target organ on the dense 3D pseudo target-domain image using a pre-trained segmentation model, thereby obtaining the structural image of the target organ.

10. A system for three-dimensional (3D) ultrasound modeling, comprising:

a generative module configured to perform a domain transform on each ultrasound image in an acquired sequence of ultrasound images of a target organ by a first generative model, thereby obtaining a corresponding sequence of pseudo target-domain images, wherein the sequence of ultrasound images of the target organ includes multiple ultrasound images acquired with an ultrasound probe at different positions, orientations and depths within a cavity of the target organ;
a repair module configured to obtain a sparse 3D pseudo target-domain image based on the sequence of pseudo target-domain images and to obtain a dense 3D pseudo target-domain image based on the sparse 3D pseudo target-domain image;
a segmentation module configured to perform an anatomical structure segmentation of the target organ on the dense 3D pseudo target-domain image, thereby obtaining a structural image of the target organ; and
a modeling module configured to perform a 3D reconstruction based on the structural image of the target organ, thereby obtaining a 3D model of the target organ.

11. An electronic device, comprising a processor and a memory storing thereon a computer program, which, when executed by the processor, implements the method according to any one of claims 1 to 9.

12. A readable storage medium, storing thereon a computer program, which, when executed by a processor, implements the method according to any one of claims 1 to 9.

PERFORM DOMAIN TRANSFORM ON EACH ULTRASOUND IMAGE IN SEQUENCE OF ACQUIRED ULTRASOUND IMAGES OF TARGET ORGAN BY FIRST GENERATIVE MODEL, THEREBY OBTAINING CORRESPONDING SEQUENCE OF PSEUDO TARGET-DOMAIN IMAGES, WHEREIN SEQUENCE OF ULTRASOUND IMAGES OF TARGET ORGAN INCLUDES MULTIPLE ULTRASOUND IMAGES ACQUIRED WITH ULTRASOUND PROBE AT DIFFERENT POSITIONS, ORIENTATIONS AND DEPTHS WITHIN CAVITY OF TARGET ORGAN — S100

OBTAIN SPARSE 3D PSEUDO TARGET-DOMAIN IMAGE FROM SEQUENCE OF PSEUDO TARGET-DOMAIN IMAGES AND OBTAIN DENSE 3D PSEUDO TARGET-DOMAIN IMAGE FROM SPARSE 3D PSEUDO TARGET-DOMAIN IMAGE — S200

OBTAIN STRUCTURAL IMAGE OF TARGET ORGAN BY ANATOMICAL SEGMENTATION OF TARGET ORGAN ON DENSE 3D PSEUDO TARGET-DOMAIN IMAGE — S300

OBTAIN 3D MODEL OF TARGET ORGAN BY 3D RECONSTRUCTION FROM STRUCTURAL IMAGE OF TARGET ORGAN — S400

Fig. 1

$\phi_1$

$\psi_1$

$\varphi_1$

$x$

$y$

$\psi_2$

$\varphi_2$

Ultrasound domain

$\phi_2$

CT domain

Fig. 2

Fig. 3

Fig. 4

Generative Module 110

Repair Module 120

Segmentation Module 130

Modeling Module 140

Fig. 5

Processor 210

240

230

Memory

Communication Interface 220

Fig. 6

## INTERNATIONAL SEARCH REPORT

| International application No. |
| --- |
| **PCT/CN2024/104350** |

| A. | CLASSIFICATION OF SUBJECT MATTER |
| --- | --- |

G06T17/00(2006.01)i

According to International Patent Classification (IPC) or to both national classification and IPC

| B. | FIELDS SEARCHED |
| --- | --- |

Minimum documentation searched (classification system followed by classification symbols)

IPC：G06T，G06F

Documentation searched other than minimum documentation to the extent that such documents are included in the fields searched

Electronic data base consulted during the international search (name of data base and, where practicable, search terms used)

CNTXT, DWPI, VEN, ENTXT, CNKI, IEEE: 超声, 核磁, 图像, 三维, 二维, 重构, 重建, 建模, 跨模态, 多模态, 跨域, 域, 转换, 生成, 判别, 鉴别, 对抗, 网络, 器, 伪, 目标, 稠密, 稀疏, 分割, 模型, 器官, 组织, 损失, 循环一致性损失, ultrasound, image, CT, MRI, three-dimensional, 3D, two-dimensional, 2D, reconstruction, modeling, multi?modal, cross-domain, domain, transformation, generation, discriminat+, network, pseudo, target, dense, sparse, segment+, model, organ, tissue, loss, circulator y w consistency w loss, dice, U?net, cycleGan, GAN

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117115355 A (SHANGHAI MICROPORT EP MEDTECH CO., LTD.) 24 November 2023 (2023-11-24)<br>claims 1-12 | 1-12 |
| A | WO 2022257345 A1 (LIU XINGYU et al.) 15 December 2022 (2022-12-15)<br>claims 1, 5, and 6 | 1-12 |
| A | WO 2022213654 A1 (SHENZHEN INSTITUTES OF ADVANCED TECHNOLOGY, CHINESE ACADEMY OF SCIENCES) 13 October 2022 (2022-10-13)<br>entire document | 1-12 |
| A | CN 111260741 A (BEIJING INSTITUTE OF TECHNOLOGY) 09 June 2020 (2020-06-09)<br>entire document | 1-12 |
| A | CN 111466952 A (BEIJING CHAO-YANG HOSPITAL, CAPITAL MEDICAL UNIVERSITY) 31 July 2020 (2020-07-31)<br>entire document | 1-12 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **26 September 2024** | **09 October 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/104350** |

**C.    DOCUMENTS CONSIDERED TO BE RELEVANT**

| Category* | Citation of document, with indication, where appropriate, of the relevant passages | Relevant to claim No. |
|---|---|---|
| A | CN 116563402 A (XUZHOU XINDA REAL ESTATE LAND ASSESSMENT CO., LTD.) 08 August 2023 (2023-08-08)<br>entire document | 1-12 |
| A | KR 20220137220 A (KOREA UNIVERSITY RESEARCH AND BUSINESS FOUNDATION) 12 October 2022 (2022-10-12)<br>entire document | 1-12 |
| A | US 2019261945 A1 (SIEMENS MEDICAL SOLUTIONS USA, INC.) 29 August 2019 (2019-08-29)<br>entire document | 1-12 |

Form PCT/ISA/210 (second sheet) (July 2022)

**INTERNATIONAL SEARCH REPORT**
Information on patent family members

International application No.

**PCT/CN2024/104350**

| Patent document cited in search report | | | Publication date (day/month/year) | Patent family member(s) | | | Publication date (day/month/year) |
|---|---|---|---|---|---|---|---|
| CN | 117115355 | A | 24 November 2023 | None | | | |
| WO | 2022257345 | A1 | 15 December 2022 | CN | 113506334 | A | 15 October 2021 |
| WO | 2022213654 | A1 | 13 October 2022 | US | 2023386048 | A1 | 30 November 2023 |
| | | | | CN | 113112559 | A | 13 July 2021 |
| CN | 111260741 | A | 09 June 2020 | None | | | |
| CN | 111466952 | A | 31 July 2020 | None | | | |
| CN | 116563402 | A | 08 August 2023 | None | | | |
| KR | 20220137220 | A | 12 October 2022 | None | | | |
| US | 2019261945 | A1 | 29 August 2019 | US | 2024023927 | A1 | 25 January 2024 |
| | | | | US | 2023113154 | A1 | 13 April 2023 |

Form PCT/ISA/210 (patent family annex) (July 2022)